# EUROPÄISCHE PATENTANMELDUNG

(11) **EP 2 783 789 A1**
(43) Veröffentlichungstag der Anmeldung: **01.10.2014**
(21) Anmeldenummer: 13161358.0
(22) Anmeldetag: 27.03.2013
(51) Int. Cl.: B23K 26/34, B23P 6/00, B29C 67/00, C21D 9/50, B22F 3/105

(54) **Verfahren zum Erzeugen von grobkörnigen Strukturen, Anwendung des Verfahrens und grobkörnige Struktur**

(71) Anmelder: Siemens Aktiengesellschaft, 80333 München (DE)
(72) Erfinder: Burbaum, Bernd, 14612 Falkensee (DE); Ott, Michael, 45470 Mülheim an der Ruhr (DE); Piegert, Sebastian, 10777 Berlin (DE)

(57) **Zusammenfassung**

Die Erfindung betrifft ein Verfahren zum Erzeugen von grobkörnigen Strukturen insbesondere auf einem kristallinen Basissubstrat mit den folgenden Schritten:
- sukzessives Auftragen einer Anzahl von Auftragsschichten (1a bis In) eines ersten Korns (20) einer ersten Korngröße (10) mittels Laserstrahlauftragsschweißen mit einem ersten Verfahrensparameter, so dass über die Anzahl von Auftragsschichten (1a bis In) das erste Korn (20), um eine Rissbildung zu vermeiden, nicht epitaktisch wächst,
- Bestrahlen der Anzahl von Auftragsschichten (1a bis In) in einem Umschmelzbereich (40) mittels Laserstrahl mit einem zweiten Verfahrensparameter, so dass ein Aufschmelzen aller oder sehr vieler Auftragsschichten (1a bis In) in dem Umschmelzbereich (40) zur Generierung eines neuen zweiten Korns (30) mit einer zweiten Korngröße (110) bewerkstelligt wird, wobei das zweite Korn (30) zumindest teilweise aus den ersten Körnern (10) der Auftragsschichten (1a bis In) im Umschmelzbereich (40) besteht.

## Beschreibung

Die Erfindung betrifft ein Verfahren zum Erzeugen von grobkörnigen Strukturen insbesondere auf einem kristallinen Basissubstrat, eine Anwendung des Verfahrens sowie eine grobkörnige Struktur.

Beim Laserpulverauftragsschweißen wird ein feines zum Teil aufgeschmolzenes, metallisches Pulver auf eine Stelle eines Werkstücks aufgebracht und mit dem Werkstück (Basissubstrat) verschmolzen. Hierzu wird üblicherweise kontinuierlich eine bestimmte Menge Pulver aufgebracht und aufgeschmolzen, wobei die Pulverzuführung und der Laser über das beziehungsweise relativ zu dem Werkstück bewegt werden. Auf diese Weise kann dem Werkstück Material hinzugefügt werden, so dass es ergänzt oder repariert werden kann. Für eine Reparatur kann beispielsweise eine beschädigte Stelle des Werkstücks ausgefräst und anschließend im Zuge des Laserpulverauftragsschweißens die ausgebohrte Stelle aufgefüllt werden. Ein Aufbauen eines Werkstücks kann auf diese Weise erfolgen. Von besonderer Bedeutung sind solche Verfahren insbesondere dort, wo mit grobkörnigen bzw. monokristallinen Werkstücken gearbeitet wird wie zum Beispiel bei der Fertigung oder der Reparatur von Gasturbinen bzw. Gasturbinenkomponenten.

Bei derartigen Verfahren haben die Auswahl geeigneter Parameter für die Menge des zuzuführenden Pulvers, der Laserleistung, des Laserdurchmessers und die Relativgeschwindigkeit, mit der die Pulverzuführung und der Laser über das Werkstück geführt werden, einen großen Einfluss auf die Eigenschaften des Prozesses. Für gute und vor allem reproduzierbare Ergebnisse ist eine genaue Einstellung und Einhaltung der gewählten Parameter von großer Wichtigkeit. Daher ist es unter anderem erstrebenswert, die innerhalb einer bestimmten Zeitspanne zugeführte Menge des Pulvers möglichst konstant halten zu können, so dass gleichbleibende Eigenschaften beim Aufschmelzen durch den Laser garantiert werden können. Mit dem Verfahren ist es möglich die kristalline Struktur des Substrates aufzunehmen, d.h. ein epitaktisches Wachstum der Körner zu forcieren. Um aber Risse zu vermeiden, müssen die Laserparameter so gewählt werden, dass die Epitaxie innerhalb der aufgebrachten Schicht zusammenbricht, so dass ein feinkörniges rissfreies Gefüge entsteht.

Das sogenannte Mikropulver-Auftragsschweißen (Micro Laser Cladding) ist eine Modifikation des klassischen Laserauftragsschweißens zum Generieren von Mikrostrukturen.

Auch beim Mikropulver-Auftragsschweißen werden Schichten mit Hilfe eines Lasers aufgebaut, bei denen der untere Teil der Schicht epitaktisch am Grundwerkstoff anwächst und oben im oberen Teil der Schicht polykristallin mit einer anderen Kristallorientierung erstarrt. Beim Schweißen der nächsten Schicht wird nur der obere Teil der darunter liegenden Schicht angeschmolzen, so dass ein epitaktisches Wachstum lediglich im oberen Bereich startet. Die Folge ist, dass das Gefüge in einer Art Schachbrettmuster erstarrt. Der Vorteil dieses Verfahrens ist, dass schwer schweißbare Legierungen mit diesem Verfahren rissfrei geschweißt werden können. Es ist jedoch von Nachteil, dass aufgrund der kleinen Korngröße im geschweißten Bereich, die Kriechfestigkeit des Werkstoffs im Vergleich zum Grundwerkstoff geringer ist.

Bisherige Ansätze zur Kornvergrößerung beziehen sich auf die Wärmenachbehandlung nach dem Schweißen (das sogenannte Post Weld Heat Treatment) und erbrachten, teilweise aufgrund von beschränkter Wärmenachbehandlung/Temperaturlimits, bisher keine befriedigenden Resultate.

Es ist daher die erste Aufgabe der Erfindung, ein Verfahren zum Erzeugen von grobkörnigen Strukturen anzugeben, welches das oben genannte Problem verhindert. Eine weitere, zweite Aufgabe ist die Angabe einer Anwendung des Verfahrens auf eine polykristalline Basisstruktur. Eine dritte Aufgabe ist die Angabe einer grobkörnigen Struktur.

Erfindungsgemäß wird die erste Aufgabe mit der Angabe eines Verfahrens zum Erzeugen von grobkörnigen Strukturen insbesondere auf einem kristallinen Basissubstrat mit den folgenden Schritten gelöst:
- sukzessives Auftragen einer Anzahl von Auftragsschichten eines ersten Korns einer ersten Korngröße mittels Laserstrahlauftragsschweißen mit einem ersten Verfahrensparameter, so dass über die Anzahl von Auftragsschichten das erste Korn, um eine Rissbildung zu vermeiden, nicht epitaktisch wächst,
- Bestrahlen der Anzahl von Auftragsschichten in einem Umschmelzbereich mittels Laserstrahl mit einem zweiten Verfahrensparameter, so dass ein Aufschmelzen aller oder sehr vieler Auftragsschichten in dem Umschmelzbereich zur Generierung eines neuen zweiten Korns, mit einer zweiten Korngröße bewerkstelligt wird, wobei das zweite Korn zumindest teilweise aus den ersten Körnern der Auftragsschichten im Umschmelzbereich besteht.

Durch das erfindungsgemäße Verfahren können nun grobkörnige Strukturen durch Laserstrahlauftragsschweißen, insbesondere Mikro-Laserstrahlauftragsschweißen generiert werden. Insbesondere, wenn das erste Korn sehr klein ist, dass heißt, beim Mikro-Laserstrahlauftragsschweißen ist dieses Verfahren von Vorteil, da man nun grobe Körner mit einer definierten Größe in der auftragsgeschweißten Struktur erzeugen kann, und sich dadurch die Kriechfestigkeit deutlich verbessert. Durch das erfindungsgemäße Verfahren ist es möglich, eine gewünschte Größe an Korn herzustellen, indem man die entsprechende Anzahl von Auftragsschichten wählt.

Bevorzugt wird das aufgetragene Material vollständig aufgeschmolzen. In besonderer Ausgestaltung ist der erste Verfahrensparameter eine erste Laserleistungsstärke und der zweite Verfahrensparameter eine zweite Laserleistungsstärke. Dabei ist die zweite Laserleistungsstärke größer als die erste Laserleistungsstärke.

Die Basisstruktur und das aufwachsende Korn können dabei aus gleichem oder aus unterschiedlichem Material bestehen. Dies erhöht die Einsatzvielfalt des Verfahrens.

Erfindungsgemäß wird die zweite Aufgabe mit der Angabe einer Anwendung des oben genannten Verfahrens auf eine polykristalline Basisstruktur gelöst, wobei die polykristalline Basisstruktur nach der Anwendung des Verfahrens mittels heißisostatischem Pressen nachbehandelt wird.

Dadurch lassen sich Risse in der Basisstruktur, welche durch das Verfahren hervorgerufen werden können, beseitigen.

Erfindungsgemäß wird die dritte Aufgabe mit der Angabe einer grobkörnigen Struktur nach dem oben genannten Verfahren gelöst. Dabei weist die erfindungsgemäße Struktur insbesondere gute Kriecheigenschaften auf und ist einfach herstellbar.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:

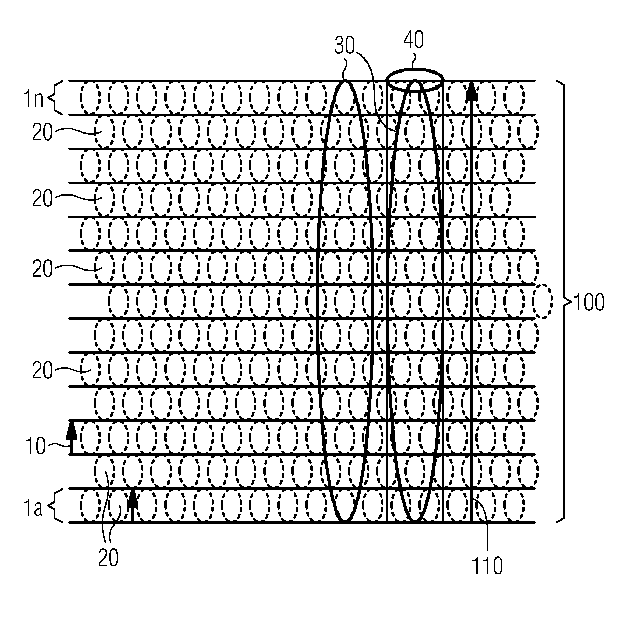

- FIG 1:: eine Struktur nach dem Mikropulver-Auftragsschweißen und schematisch das erfindungsgemäße Verfahrensprinzip.

FIG 1 zeigt eine Struktur, die mit Mikropulver-Auftragsschweißen hergestellt wurde. Dabei wird eine erste Auftragsschicht 1a von einem Pulver mit einem ersten Korn 20 und einer ersten Korngröße 10 aufgetragen. Die erste Auftragsschicht 1a kann dabei auf einem kristallinen Basissubstrat (nicht gezeigt) aufgetragen sein. Das Pulver und das Basissubstrat (nicht gezeigt) werden nun durch Laserstrahlauftragsschweißen verbunden. Dabei hat der Laser eine geringe erste Laserleistungsstärke, so dass lediglich das Pulver sowie die Oberflächenschicht des Basissubstrats (nicht gezeigt) verbunden werden. Das Pulver kann beim Auftragen bereits vollständig geschmolzen sein. Der Laserstrahl schmilzt eine dünne Randschicht der Basisstruktur (nicht gezeigt) sowie gleichzeitig das einfallende Pulver auf und verbindet diese schmelzmetallurgisch miteinander, so dass eine dichte Schicht entsteht. Aufgrund der lokal begrenzten Wärmeeinbringung, die auf der guten Fokussierbarkeit der Laserstrahlung beruht, wird in den Grundwerkstoff weniger Energie als bei konventionellen Schweißverfahren eingebracht, so dass nur eine kleine Wärmeeinflusszone entsteht. Das zugeführte Material, wird in die aufgeschmolzene Basisstruktur (nicht gezeigt) eingebracht. Dieses zugeführte Material, also z.B. das geschmolzene Pulver, wächst zunächst als epitaktische Struktur auf dem Substrat zu einer ersten Auftragsschicht 1a heran. Ist die Basisstruktur (nicht gezeigt) einkristallin, erstarrt die Auftragsschicht 1a ebenfalls einkristallin. An der Oberfläche der Auftragsschicht 1a kann die Auftragsschicht 1a jedoch polykristallin erstarren. Die Basisstruktur kann jedoch auch polykristallin sein. Auch kann jedoch die erste Auftragsschicht 1a als Basisstruktur herangezogen werden.

Anschließend wird die Oberfläche der ersten Auftragsschicht 1a mit einem Laser mit der geringen ersten Laserleistungsstärke aufgeschmolzen und ein zweites Pulver, welches wiederum das erste Korn 20 mit der ersten Korngröße 10 besteht, verbunden. Dies wird bis zur Auftragsschicht In, mit einem ersten Korn 20 und einer ersten Korngröße wiederholt. Das erste Korn 20 der verschiedenen Schichten 1a-1n kann dabei auch ein zu dem ersten Korn 20 passendes Korn mit ungefähr derselben Korngröße sein; das heißt, das erste Korn 20 steht als Variable für untereinander kongruierende Körner 20. Dabei ist die erste Korngröße 10 sehr klein z.B. 2 µm. Einfachheitshalber wird angenommen, dass die erste Korngröße 10 nun gleich der ersten Auftragsschichtshöhe 1a ist. Somit haben alle Auftragsschichten 1a-1n die gleiche Auftragsschichtshöhe, welche der ersten Korngröße 10 entspricht. Die Auftragsschichten 1a-1n sind alle durch Mikropulver - Auftragsschweißen miteinander verbunden.

Rein erstarrungstechnisch nimmt die jeweils aufgeschweißte Schicht immer die Orientierung des darunterliegenden Substrates auf. Mit zunehmender Anzahl von Schichten 1a-1n bilden sich aber vermehrt ungewollte grobe Fehlkörner aus, die dann zu Rissen im Schweißgut führen. Es ist daher durch die gezielte Parameterwahl sicherzustellen, dass die Epitaxie in der jeweils aufgeschweißten Schicht 1a-1n zusammenbricht, so dass die Körner nicht über mehrere Schichten 1a-1n des Schweißgutes gezogen werden können. Es entsteht ein feinkörniges Gefüge ohne Risse. Nachteilig ist aber, dass diese feinkörnige Mikrostruktur eine schlechte Kriechfestigkeit aufweist.

Um nun die Kriecheigenschaft der verbunden Auftragsschichten 1a bis In zu verbessern, wird nun der Laser mit einem zweiten Verfahrensparameter auf die Auftragsschichten 1a bis In in einem Umschmelzbereich 40 angewandt. Dabei ist der zweite Verfahrensparameter beispielsweise eine wesentlich höhere zweite Laserleistungsstärke als die erste Laserleistungsstärke. Dies bewirkt zumindest teilweise ein Umschmelzen der Auftragsschichten 1a bis In im Umschmelzbereich 40, so dass daraus ein zweites Korn 30, welches zumindest teilweise aus den In-ersten, übereinanderliegenden Körner 10 im Umschmelzbereich 40 der Auftragsschichten 1a bis In besteht, generiert wird. Dieses kann beispielsweise eine andere Orientierung aufweisen. Das heißt, dass das zweite Korn 30 aus den ersten übereinanderliegenden Körnern 20 im Umschmelzbereich 40 besteht. Dieses Korn 30 hat nun eine zweite Korngröße 110, die wesentlich größer ist als die erste Korngröße 10. Das entstehende zweite Korn 30 bildet damit eine neue Schicht 100 mit einer neuen Schichthöhe. Das bedeutet, dass einzelne Korngrenzen dabei aufgelöst werden; die Körner 20 verschmelzen zu größeren Einheiten. Haben nun die Auftragsschichten 1a-1n eine Höhe von jeweils 2 µm, das heißt ein erstes Korn 20 mit einer Größe von 2 µm und existieren 10 Schichten (1n=10), so kann nun durch Anwendung einer höheren Laserleistungsstärke und dem damit verbundenen Umschmelzen ein neues zweites Korn 30 erzeugt werden, das eine Korngröße 110 von 20 µm hat.

Mit dem erfindungsgemäßen Verfahren können nun Strukturen mit definierter Korngröße generiert werden. Mit dem erfindungsgemäßen Verfahren ist es weiterhin möglich, eine erfindungsgemäße auftragsgeschweißte Struktur herzustellen, welche verbesserte Kriecheigenschaften aufweist.

Wird das Verfahren auf eine polykristalline Basisstruktur angewendet, so werden nach dem Anwenden des Verfahrens die Basisstruktur oder die Basisstruktur und die neu erzeugte grobkörnige Schicht mittels heißisostatischem Pressen nachbehandelt. Auf diese Weise können entstandene Risse, insbesondere bei Anwendung des zweiten Verfahrensparameters beseitigt werden.

## Patentansprüche

1. Verfahren zum Erzeugen von grobkörnigen Strukturen insbesondere auf einem kristallinen Basissubstrat mit den folgenden Schritten:
- sukzessives Auftragen einer Anzahl von Auftragsschichten (1a bis In) eines ersten Korns (20) einer ersten Korngröße (10) mittels Laserstrahlauftragsschweißen mit einem ersten Verfahrensparameter, so dass über die Anzahl von Auftragsschichten (1a bis In) das erste Korn (20), um eine Rissbildung zu vermeiden, nicht epitaktisch wächst,
- Bestrahlen der Anzahl von Auftragsschichten (1a bis In) in einem Umschmelzbereich (40) mittels Laserstrahl mit einem zweiten Verfahrensparameter, so dass ein Aufschmelzen aller oder sehr vieler Auftragsschichten (1a bis In) in dem Umschmelzbereich (40) zur Generierung eines neuen zweiten Korns (30) mit einer zweiten Korngröße (110) bewerkstelligt wird, wobei das zweite Korn (30) zumindest teilweise aus den ersten Körnern (10) der Auftragsschichten (1a bis In) im Umschmelzbereich (40) besteht.

2. Verfahren zum Erzeugen von grobkörnigen Strukturen nach Anspruch 1,
**dadurch gekennzeichnet, dass** das aufgetragene Material vollständig aufgeschmolzen wird.

3. Verfahren zum Erzeugen von grobkörnigen Strukturen nach einem der vorhergehenden Ansprüchen,
**dadurch gekennzeichne**t, **dass** der erste Verfahrensparameter eine erste Laserleistungsstärke und der zweite Verfahrensparameter eine zweite Laserleistungsstärke ist.

4. Verfahren zum Erzeugen von grobkörnigen Strukturen nach Anspruch 3,
**dadurch gekennzeichnet, dass** die erste Laserleistungsstärke größer als die zweite Laserleistungsstärke ist.

5. Verfahren zum Erzeugen von grobkörnigen Strukturen nach einem der Ansprüche 1 bis 4,
**dadurch gekennzeichne**t, **dass** die Basisstruktur und das aufwachsende, erste Korn (20) aus gleichem oder unterschiedlichem Material bestehen.

6. Anwenden des Verfahrens nach einem der Ansprüche 1-5 auf eine polykristalline Basisstruktur, wobei die polykristalline Basisstruktur nach dem Anwenden des Verfahrens mittels heißisostatischem Pressen nachbehandelt wird.

7. Grobkörnige Struktur nach einem Verfahren der Ansprüche 1-5.
